## Europäisches Patentamt
## European Patent Office
## Office européen des brevets

(11) Veröffentlichungsnummer: **0 282 847 B1**

(12) **EUROPÄISCHE PATENTSCHRIFT**

(45) Veröffentlichungstag der Patentschrift: **29.05.91**

(51) Int. Cl.⁵: **B29C 49/22, B29C 49/24**

(21) Anmeldenummer: **88103424.3**

(22) Anmeldetag: **05.03.88**

(54) Verfahren zur Herstellung blasgeformter, aus thermoplastischen Kunststoffen bestehender Hohlkörper.

(30) Priorität: **14.03.87 DE 3708290**

(43) Veröffentlichungstag der Anmeldung:
**21.09.88 Patentblatt 88/38**

(45) Bekanntmachung des Hinweises auf die Patenterteilung:
**29.05.91 Patentblatt 91/22**

(84) Benannte Vertragsstaaten:
**DE ES FR GB IT SE**

(56) Entgegenhaltungen:
DE-A- 2 106 494
FR-A- 2 119 200
GB-A- 1 227 083
US-A- 1 588 933

**DERWENT JAPANESE PATENTS REPORT,
Woche R49, 29. Januar 1971, Klasse A, Seite
2, Zusammenfassung Nr. 91219r, Derwent
Publications Ltd, London, GB; & JP-B-70 39
189 (H. OGAWA) 12-10-1970**

**PATENT ABSTRACTS OF JAPAN, Band 6, Nr.
196 (M-161)[1074], 5. Oktober 1982; & JP-A-57
102 322 (NIHON PURASUTO K.K.) 25-06-1982**

**PATENT ABSTRACTS OF JAPAN, Band 8, Nr.
112 (M-298)[1549], 25. Mai 1984, Seite 165 M
298; & JP-A-59 22 728 (YOSHIHIRO IHARA)
06-02-1984**

(73) Patentinhaber: **BASF Aktiengesellschaft
Carl-Bosch-Strasse 38
W-6700 Ludwigshafen(DE)**

(72) Erfinder: **Nehrig, Juergen
Theodor-Heuss-Strasse 12
W-6706 Wachenheim(DE)**

## Beschreibung

Die Erfindung betrifft ein Verfahren zur Herstellung blasgeformter, aus thermoplastischen Kunststoffen bestehender Hohlkörper gemäß dem Oberbegriff des Anspruchs 1.

Ein Verfahren dieser Art ist aus der EP-A-75 816 bekannt. Dabei wird thermoplastischer Kunststoff in Form eines Schmelzeschlauches in ein das Hohlkörperprofil aufweisendes Blaswerkzeug eingebracht. Während des anschließenden Blasformens legt sich der Kunststoff gegen eine im Blaswerkzeug befindliche, die Außenkontur des Hohlkörpers allseitig begrenzende Folie bzw. Verbundfolie an und verbindet sich mit dieser. In die Werkzeughöhlung eingelegte Folien führen jedoch in der Regel zu einer zu geringen Haftung an der Hohlkörperoberfläche. Dies ergibt sich daraus, daß während des Blasformens zu viel Wärme an das kalte Werkzeug abgeleitet wird und somit die Temperatur an den Kontaktflächen zwischen Folie und aufgeblasenem Schmelzeschlauch nicht ausreichend hoch ist. Außerdem müssen die Folien vor ihrem Einbringen in das Blaswerkzeug häufig tiefgezogen werden, so daß zusätzliche Kosten anfallen.

Weiterhin ist aus der DE-PS 1 929 983 ein Verfahren bekannt, bei dem Folien für das Oberflächenbeschichten von Hohlkörpern zwischen den auseinandergefahrenen Werkzeughälften aufgehängt oder vor die Werkzeughöhlung gespannt werden und bei dem danach ein Innenbehälter aus einem thermoplastischen Kunststoff bis zum Anliegen und Verbinden mit der Innenoberfläche der Folien blasgeformt wird. Auf diese Weise können jedoch Folien lediglich zum Zwecke der Etikettierung der Hohlkörper in das Werkzeug eingebracht werden. Bei größeren Folien ist ein Reißen während des Blasformens meistens nicht zu vermeiden, weil sich die Folien hauptsächlich dort dehnen, wo sie bereits durch den Kontakt oder die Nähe des Schmelzeschlauches erwärmt wurden, in den anderen Bereichen aber kaum. Sobald die Folie den Schmelzeschlauch berührt, entstehen zudem durch dessen Relaxieren Falten in den Bereichen, die noch nicht am Schmelzeschlauch haften. Dies führt zu Lufteinschlüssen, welche das Aufbringen der Folien erschweren und die mechanischen Eigenschaften der Hohlkörper beeinträchtigen. Darüber hinaus verursacht die von Zyklus zu Zyklus oft unterschiedliche Erwärmung der Folien unterschiedliche Wanddickenverteilungen, insbesondere im Bereich der Quetschnähte.

Mit der Erfindung soll ein Verfahren zur Herstellung von Hohlkörpern aus einem Mehrschichtenverbund geschaffen werden, welches von den vorstehend geschilderten Mängeln frei ist und insbesondere auf möglichst einfache Weise ein sicheres Kaschieren, gegebenenfalls auch des gesamten Umfangs eines blasgeformten Hohlkörpers gewährleistet.

Zur Lösung dieser Aufgabe werden die im Kennzeichen des Anspruchs 1 enthaltenen Maßnahmen vorgeschlagen.

Bei dem erfindungsgemäßen Verfahren erfolgt das Aufbringen der Folie(n) auf die Tragschicht beim Ausstoßen des Schmelzeschlauches aus einem Schlauchkopf, so daß noch vor dem eigentlichen Blasvorgang eine innige Verbindung zwischen dem thermoplastischen Schmelzeschlauch und der Folie entsteht, da hierbei die Folie etwa die Temperatur des Schmelzeschlauches annimmt. Dadurch wird auch in Bereichen, in denen der Schmelzeschlauch beim Aufblasen extrem gedehnt wird, ein Reißen der Folie vermieden. Dies gilt auch für Folien, die besonders dünn sind, eine geringere Dehnfähigkeit haben als das Material der Trägerschicht oder schlecht warmformbar sind. Entscheidend für die Qualität des Schmelzeschlauch-Folien-Verbundes ist nur, daß vor dem Blasformen die Warmformtemperatur der Folie erreicht wird. Die Blasformtechnik sowie die Gestaltungsmöglichkeiten der Hohlkörper werden nicht eingeengt, weil sich der mit der Folie versehene Schmelzeschlauch beim Blasformen so verhält wie ein nicht beschichteter Schmelzeschlauch.

Die Folien können sowohl auf die innere Oberfläche als auch auf die äußere Oberfläche des Schmelzeschlauches aufgebracht werden. Insbesondere wenn Folien auf der inneren Oberfläche der Tragschicht ausgebildet sind, lassen sich in vielen Fällen die Gebrauchseigenschaften von Hohlkörpern verbessern. Folien, die an den Innenflächen der Schmelzeschläuche haften, werden nach dem Aufblasen nicht sofort an der kalten Werkzeugwand abgekühlt. Es stellen sich also an den Kontaktflächen besonders hohe Temperaturen ein, die für eine gute Haftung der Folien auf der Tragschicht sorgen. Hinzu kommt, daß diese Folien für viele Medien eine Sperrschicht darstellen und somit nicht durch die Medien von der Tragschicht abgehoben werden können. Auch für Schweißarbeiten an den Hohlkörpern ist es häufig vorteilhaft, wenn sich die Diffusionssperrschicht auf der Hohlkörperinnenseite befindet.

In vorteilhafter Weise kann das Verfahren so durchgeführt werden, wie in den Ansprüchen 2 bis 6 angegeben. Insbesondere wenn die Durchführung so erfolgt wie in den Ansprüchen 4 und 5 angegeben, ist es möglich, gasundurchlässige oder wenig gasdurchlässige Hohlkörper herzustellen. Als Folien kommen dabei z.B. solche aus polyvinylidenchlorid, Polyvinylchlorid oder Polyamid in Betracht. Die Folien sind im allgemeinen 0,01 bis 0,5 mm dick und werden nach üblichen Verfahren hergestellt. Sie sind einseitig mit einem thermoplastischen Haftvermittler beschichtet. Unter thermoplastischem Haftvermittler werden dabei die an sich bekannten Haftvermittler, bestehend aus Copolymerisaten des Ethylens mit Acrylsäure, Acrylsäureestern und/oder Vinylacetat verstanden. Als Haftvermittler eignen sich z.B. die in den deutschen Patentschriften 1 769 422 und 1 918 214 beschriebenen Carboxylgruppen aufweisenden Olefincopolymerisate. Geeignet sind auch Terpolymerisate aus Ethylen, einer ethylenisch ungesättigten Carbonsäure und einem Ester einer ethylenisch ungesättigten Carbonsäure, wie sie aus den DE-OS 17 95 269, DE-OS 27 53 697 und DE-OS 16 69 685 bekannt sind.

Die Erfindung wird nachfolgend unter Hinweis auf die Zeichnungen näher erläutert.

Erfindungsgemäß erfolgt das Aufbringen der Folie auf den Schmelzeschlauch in der Nähe des Schlauchkopfes. Dazu wird die Folie als Folienstreifen oder Foliensack in der erforderlichen Länge unter dem Schlauchkopf zusammengerafft und so eingeklemmt, daß sie leicht abgezogen werden kann. Dies geschieht durch den nach dem Ausstoßen aus dem Schlauchkopf aufquellenden Schmelzeschlauch, wobei sich die Folie während der Ausstoßphase vollständig an den Schmelzeschlauch anlegt. Lufteinschlüsse treten nicht auf; die Luft wird in Richtung der Düse verdrängt. Die Verbindung von Folie und Schmelzeschlauch kann auch durch Andrücken der Folie an den Schmelzeschlauch mit Hilfe eines Luftstromes oder mit Hilfe weicher Bürsten, Rollen u. dgl. unterstützt werden. Im Falle der Verwendung von Folienstreifen können diese sich gegenseitig überlappend oder auch nebeneinanderliegend auf den Schmelzeschlauch aufgebracht oder aber wendelförmig aufgewickelt werden.

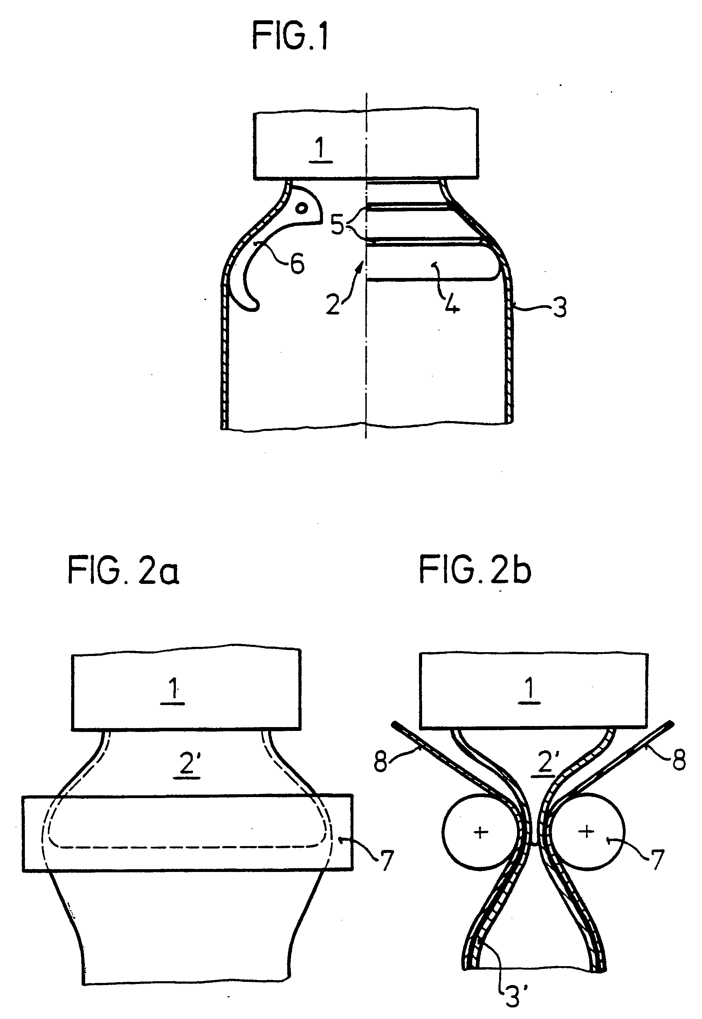

Längsfalten des Schmelzeschlauches lassen sich durch einen unter dem Schlauchkopf (1) installierten Schirm (2) verhindern (Fig. 1). Dieser ist so ausgebildet und angeordnet, daß der Schmelzeschlauch (3), sobald er aus dem Schlauchkopf austritt, gestützt wird. Vorzugsweise kann der Schirm aus mehreren Elementen, z.B. Ringen (4), die zwischen sich Schlitze (5) für das Hindurchleiten eines Luftstromes definieren oder aus mehreren verstellbaren Segmenten (6) bestehen, auf der Oberfläche mit einer Gleitschicht versehen sein und gegebenenfalls temperierbar sein.

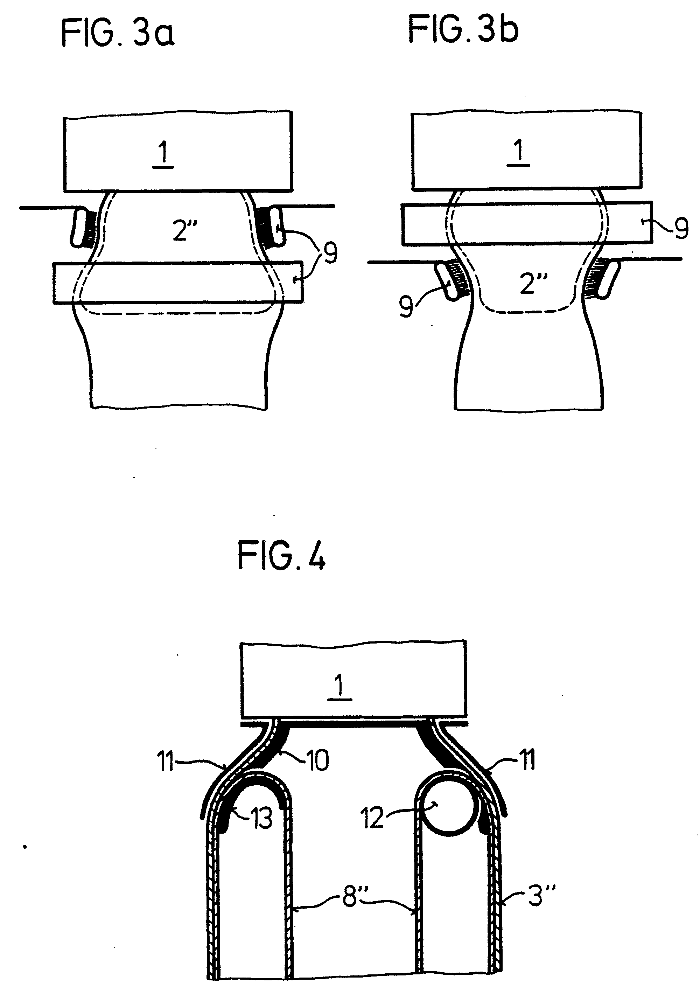

Zum Aufbringen von Folienstreifen (8) auf den Schmelzeschlauch (3') hat es sich als vorteilhaft erwiesen, den Schirm (2', 2") von einem kreisförmigen Querschnitt im Bereich des Schlauchkopfes (1) kontinuierlich in einen schwertförmigen oder vieleckigen Querschnitt übergehen zu lassen. Dadurch wird das Aufbringen der Folienstreifen erleichtert, weil die Folienstreifen sich besser an eine flache als an eine gewölbte Schlauchfläche andrükken lassen. Das gilt besonders, wenn die Folien mittels Rollen (7) oder mittels Bürsten (9) an den Schmelzeschlauch geheftet werden. Einige Querschnitte des Schirms scwie Beispiele für das Aufbringen der Folien auf den Schmelzeschlauch sind in den Figuren 2 und 3 schematisch dargestellt.

Für das Beschichten der inneren Oberfläche des Schmelzeschlauches kann gemäß Figur 4 der Schmelzeschlauch (3") auch über einen Träger (10) mit äußeren Leitblechen (11) ausgetragen und die Folien (8") mittels Rollen (12) oder Bügel (13) dem Schmelzeschlauch zugeführt werden. Die Rollen bzw. Bügel können dabei gegenüber den Leitblechen so angebracht sein, daß die Folien unter Druck mit dem Schmelzeschlauch verhaftet werden.

Der auf diese Weise gebildete Schmelzeschlauch-Folien-Verbund wird anschließend von einem Formwerkzeug umfaßt und durch Einführen eines Druckmittels zum Hohlkörper aufgeblasen. Das Aufblasen kann über den Schlauchkopf (1), über einen bzw. mehrere Blasdorne oder über Schlauchkopf und Blasdorn erfolgen, wobei der Blasdorn entweder über das unten offene Schlauchende eingeführt oder von unten oder seitlich bei geschlossenem oder fast geschlossenem Formwerkzeug durch den Schmelzeschlauch-Folien-Verbund gestoßen wird.

**Ansprüche**

1. Verfahren zur Herstellung blasgeformter, aus thermoplastischen Kunststoffen bestehender Hohlkörper, deren Wandung oder zumindest Teilbereiche derselben wenigstens zwei Schichten aufweist, von denen eine Schicht als Tragschicht ausgebildet ist, welche als Schmelzeschlauch von einem Schlauchkopf ausgestoßen und von einem Formwerkzeug umfaßt wird, in dem das Aufblasen zum Hohlkörper durch Einführen eines Druckmittels erfolgt, und wenigstens eine andere Schicht aus einer Folie besteht, die mit der Tragschicht verschweißt wird, dadurch gekennzeichnet, daß der Schmelzeschlauch während des Ausstoßens auf der inneren und/oder äußeren Oberfläche mit einer oder mehreren Folie(n) beschichtet und anschließend der Schmelzeschlauch-Folien-Verbund blasgeformt wird.

2. Verfahren nach Anspruch 1, dadurch gekennzeichnet, daß die Folie(n) unmittelbar unterhalb des Schlauchkopfes dem Schmelzeschlauch zugeführt werden.

3. Verfahren nach Anspruch 1 oder 2, dadurch gekennzeichnet, daß als Folien Folienstreifen und/oder Foliensäcke verwendet werden.

4. Verfahren nach Anspruch 3, dadurch gekennzeichnet, daß ein oder mehrere Folienstreifen wendelförmig auf den Schmelzeschlauch aufgewickelt wird bzw. werden.

5. Verfahren nach Anspruch 1 oder 2, dadurch gekennzeichnet, daß als Folien Verbundfolien mit einer Beschichtung aus einem Material, welches der Vermittlung oder Haftung zwischen Schmelzeschlauch und Folie dient, verwendet werden.

6. Verfahren nach einem der vorhergehenden Ansprüche, dadurch gekennzeichnet, daß der Schmelzeschlauch und die Folie(n) unter der Einwirkung mechanischer und/oder pneumatischer Mittel miteinander verbunden werden.

## Claims

1. A process for the production of a blow-molded hollow article of a thermoplastic material, whose walls or at least parts thereof have two or more layers, one of which is in the form of a supporting layer which is discharged as a molten tube from a parison die and is held by a mold, in which the blowing to give the hollow article is effected by the introduction of a pressure medium, and one or more other layers consist of a film which is welded to the supporting layer, wherein the molten tube is laminated on the inner and/or outer surfaces with one or more films during discharge and the molten tube/film laminate is then blow-molded.

2. A process as claimed in claim 1, wherein the film or films is or are fed to the molten tube directly below the parison die.

3. A process as claimed in claim 1 or 2, wherein the films used are film strips and/or film bags.

4. A process as claimed in claim 3, wherein one or more film strips are wound in the form of a coil around the molten tube.

5. A process as claimed in claim 1 or 2, wherein the films used are laminated films having a coating of a material which serves to impart adhesion between the molten tube and the film.

6. A process as claimed in any of the preceding claims, wherein the molten tube and the film or films are bonded to one another by mechanical and/or pneumatic means.

## Revendications

1. Procédé de fabrication de corps creux, constitués de matières thermoplastiques, formés par soufflage, dont la paroi ou au moins des zones partielles de celle-ci possèdent au moins deux couches, une d'elle étant formée comme couche de support, qui est expulsée d'une tête tubulaire sous forme de gaîne de coulée et qui est entourée par un outil de formage dans lequel s'effectue, par introduction d'un agent de pression, la formation par soufflage d'un corps creux, et au moins une autre couche est constituée par une feuille qui est soudée à la couche de support, caractérisé par le fait que la gaîne de coulée est recouverte pendant son expulsion, sur les surfaces intérieure et/ou extérieure, d'une (ou plusieurs) feuille(s) et ensuite le groupe composite gaîne de coulée-feuilles est formé par soufflage.

2. Procédé selon la revendication 1, caractérisé par le fait que la(les) feuille(s) sont amenées directement sous la tête tubulaire de la gaîne de coulée.

3. Procédé selon la revendication 1 ou 2, caractérisé par le fait que l'on utilise comme feuilles des bandes ou des sacs.

4. Procédé selon la revendication 3, caractérisé par le fait qu'on enroule en hélice sur la gaîne de coulée une ou plusieurs feuilles en bandes.

5. Procédé selon l'une des revendications 1 ou 2, caractérisé par le fait que l'on utilise comme feuilles des feuilles composites à revêtement en un matériau qui sert de liaison ou d'adhérence entre la gaîne de coulée et les feuilles.

6. Procédé selon l'une des revendications précédentes, caractérisé par le fait que la gaîne de coulée et les feuilles sont reliées entre elles sous l'action d'un moyen mécanique et/ou pneumatique.

# FIG.1

# FIG.2a

# FIG.2b

# FIG. 3a

# FIG. 3b

# FIG. 4